(19) **Europäisches Patentamt**

**European Patent Office**

**Office européen des brevets**

(11) **EP 1 424 472 B1**

(12) **FASCICULE DE BREVET EUROPEEN**

(45) Date de publication et mention
de la délivrance du brevet:
**13.12.2006 Bulletin 2006/50**

(51) Int Cl.:
*F01N 7/18* *(2006.01)*      *F01N 7/14* *(2006.01)*
*F16L 27/10* *(2006.01)*

(21) Numéro de dépôt: **03292753.5**

(22) Date de dépôt: **04.11.2003**

(54) **Perfectionnement à un flexible de découplage pour une ligne d'échappement de moteur de véhicule automobile**

Verbesserung zu einem flexibelen Entkopplungselement für eine Auspuffanlage eines Kraftfahrzeugmotors

Improvement to a flexible decoupling joint in an exhaust line of a motor vehicle engine

(84) Etats contractants désignés:
**DE ES FR GB IT SE**

(30) Priorité: **28.11.2002 FR 0214958**

(43) Date de publication de la demande:
**02.06.2004 Bulletin 2004/23**

(73) Titulaire: **HUTCHINSON**
**75008 Paris (FR)**

(72) Inventeurs:
• **Simon, Jean-Michel**
  **92320 Chatillon (FR)**
• **Girot, Claire**
  **91610 Ballancourt (FR)**

(74) Mandataire: **Bolinches, Michel Jean-Marie et al**
**Cabinet Orès**
**36, rue de St Pétersbourg**
**75008 Paris (FR)**

(56) Documents cités:
**EP-A- 0 282 689**      **EP-A- 0 458 011**
**DE-A- 19 603 594**      **US-A- 3 844 587**
**US-A- 4 345 430**      **US-A- 5 904 378**

**EP 1 424 472 B1**

**Description**

L'invention concerne un perfectionnement apporté à un flexible de découplage destiné à être monté dans une ligne d'échappement de moteur de véhicule automobile.

D'une manière générale, une ligne d'échappement d'un moteur de véhicule automobile est montée en sortie du collecteur d'échappement du moteur et suspendue à la caisse du véhicule. La présence d'un flexible de découplage permet à la ligne d'échappement de supporter les débattements du moteur liés à des accélérations verticales, aux changements brutaux de vitesse, aux dilatations thermiques, aux tolérances de montage, ..., et permet d'obtenir la souplesse nécessaire au découplage vibratoire du moteur par rapport à la ligne d'échappement d'une part et à la caisse d'autre part, et améliore le confort dans l'habitacle du véhicule.

On connaît du document FR-A-2 796 416 un flexible de découplage qui comprend notamment une partie interne apte à canaliser le flux des gaz d'échappement, une partie externe sous la forme d'une enveloppe continue et étanche comprenant une zone centrale souple et deux coiffes d'extrémité rigides, et une partie intermédiaire sous la forme d'un isolant thermique qui s'étend sensiblement sur toute la longueur de l'enveloppe externe. Les deux coiffes métalliques ont essentiellement pour fonction de protéger thermiquement la zone centrale souple de l'enveloppe externe du flexible en l'éloignant le plus possible des zones chaudes de raccordement du flexible à la ligne d'échappement.

Par ailleurs, tout flexible monté sur un véhicule subit des déformations dans plusieurs directions et notamment des débattements transversaux en cisaillement qui peuvent atteindre une amplitude de $\pm$ 50 mm pour de gros véhicules. Lors d'essais en endurance effectués sur un flexible du type précité, la Demanderesse a constaté un endommagement de l'isolant thermique au niveau du bord périphérique d'extrémité de chaque coiffe qui est raccordé à la zone centrale de l'enveloppe externe. En effet, lors d'importantes amplitudes en cisaillement, l'isolant se trouve localement comprimé et ledit bord périphérique d'extrémité des coiffes vient découper l'isolant dans sa zone comprimée.

Selon des essais sur véhicules équipés de flexibles ayant une longueur comprise entre 150 et 200 mm, on a relevé des amplitudes maximales en cisaillement de l'ordre de $\pm$ 15 à 20 mm et, après 10 000 km de roulage, le phénomène d'usure précité a été constaté. Par ailleurs, des essais sur un banc de simulation qui ont consisté à imposer au flexible des contraintes en cisaillement avec des amplitudes de $\pm$ 12mm combinées à des contraintes de traction/compression de l'ordre de 3mm, le phénomène d'usure précité a été constaté après 500 000 cycles.

L'analyse de ces différents essais a démontré que cette usure de l'isolant résultait du fait que la partie interne du flexible se déformait sur une longueur plus importante que celle de la zone centrale souple de son enveloppe externe.

Un but de l'invention est notamment de pallier ce phénomène d'usure soit en définissant la longueur effective des coiffes en prenant en compte l'épaisseur du matelas isolant qui est comprimé par les coiffes lors des déformations de la partie interne du flexible pour définir une longueur maximum de coiffe, sachant que les coiffes de l'enveloppe externe doivent s'étendre sur une longueur suffisante pour assurer leur fonction première qui est de protéger thermiquement la zone centrale souple de l'enveloppe externe, soit en limitant ou en évitant une compression du matelas isolant par les coiffes lors des déformations de la partie interne du flexible pour s'affranchir d'une contrainte sur la longueur des coiffes.

A cet effet, selon une première approche du problème à résoudre, l'invention propose une méthode pour éviter la détérioration d'un flexible de découplage monté entre deux tubulures d'une ligne d'échappement de moteur de véhicule automobile, ce flexible comprenant une partie interne déformable qui est apte à canaliser le flux des gaz d'échappement et à subir en fonctionnement des déformations telles que des débattements transversaux en cisaillement, une partie externe sous la forme d'une enveloppe continue et étanche comprenant une zone centrale souple et deux coiffes d'extrémité rigides, et une partie intermédiaire sous la forme d'un matelas d'isolation thermique qui s'étend sensiblement sur toute la longueur de la partie externe entre la partie interne déformable et la partie externe, chaque coiffe rigide s'étendant au moins sur une longueur telle que son bord d'extrémité périphérique raccordé à la zone centrale souple vient se situer en regard de la partie interne du flexible qui est soumise à des déformations, méthode qui est caractérisée en ce qu'elle consiste, pour éviter tout endommagement du matelas d'isolation thermique par ledit bord d'extrémité périphérique de chaque coiffe lors des débattements transversaux en cisaillement de la partie interne du flexible, à définir la longueur effective des coiffes de manière à ce que, pour une épaisseur initiale ($H_o$) du matelas d'isolation thermique et une épaisseur comprimée ($H_c$) de ce matelas par ledit bord périphérique de chaque coiffe lors d'un débattement transversal maximum en fonctionnement de la partie interne du flexible, le rapport [($H_o$-$H_c$)/$H_o$] soit inférieur à 0,3.

En variante, selon une seconde approche du problème à résoudre, la méthode est caractérisée en ce qu'elle consiste, pour éviter tout endommagement du matelas d'isolation thermique par ledit bord d'extrémité périphérique de chaque coiffe lors des débattements transversaux en cisaillement de la partie interne du flexible, à augmenter le diamètre de chaque coiffe avec un espace libre initial suffisant entre lesdits bords d'extrémité périphériques des coiffes et le matelas isolant, de manière à ce que ledit bord d'extrémité périphérique des coiffes ne vienne pratiquement pas en contact avec le matelas d'isolation thermique lors d'un débattement transversal maximum en fonctionnement de la partie interne du flexible.

Les deux approches précitées pour résoudre le problème posé par l'invention relèvent ainsi d'un même concept inventif général.

L'invention a également pour objet un flexible de découplage pour ligne d'échappement de moteur de véhicule automobile, qui est caractérisé en ce qu'il est réalisé en mettant en oeuvre la méthode telle que définie précédemment.

D'autres avantages, caractéristiques et détails de l'invention ressortiront du complément de description qui va suivre en référence à des dessins annexés, donnés uniquement à titre d'exemple et dans lesquels :

- la figure 1 est une vue en coupe longitudinale d'un flexible de découplage selon un mode de réalisation de l'invention ;
- la figure 2 est une vue en coupe schématique pour illustrer la déformation du flexible de la figure 1 lorsqu'il est soumis à un débattement transversal maximum ;
- la figure 3 représente le flexible de découplage de la figure 1 lorsqu'il est soumis à une déformation en cisaillement ; et
- la figure 4 est une vue en coupe longitudinale d'un flexible de découplage selon l'invention suivant deux demi-vues supérieure et inférieure pour illustrer deux autres modes de réalisation.

Un flexible de découplage selon l'invention est destiné à être monté entre deux tubulures d'une ligne d'échappement d'un véhicule automobile, et il comprend globalement une partie interne déformable qui est apte à canaliser le flux des gaz d'échappement et à se déformer lorsque le flexible est en service ou en fonctionnement, une partie externe sous la forme d'une enveloppe continue, étanche et au moins en partie souple pour permettre la déformation de la partie interne, et une partie intermédiaire sous la forme d'un matelas d'isolation thermique interposé entre la partie interne et la partie externe du flexible.

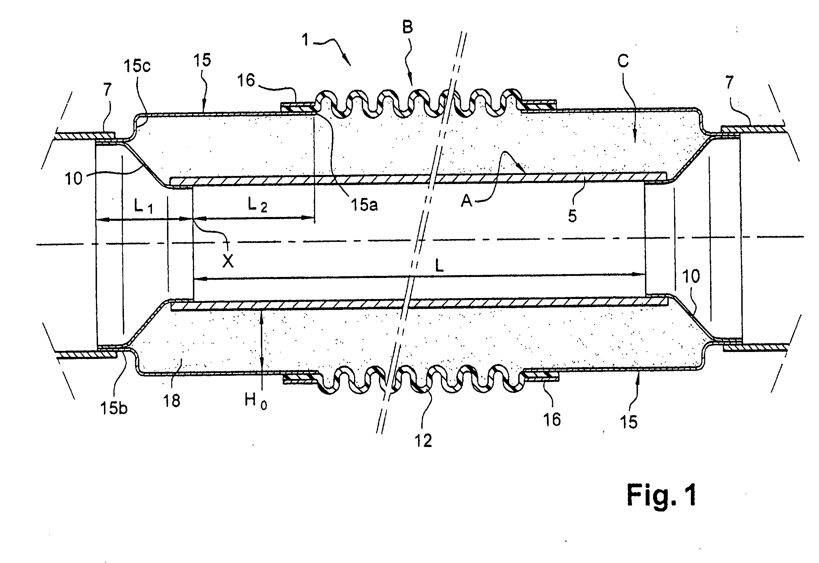

En reprenant un flexible de découplage tel qu'illustré sur la figure 1, la partie interne A du flexible 1 est constituée par un élément métallique tubulaire déformable 5 qui, à titre d'exemple, peut se présenter sous la forme d'un agrafé, avantageusement un agrafé très lâche à double agrafage. Chaque extrémité de l'élément tubulaire 5 se raccorde à une tubulure 7 de la ligne d'échappement par un embout métallique de liaison 10 qui peut être soudé à l'élément 5 et/ou à la tubulure 7, sachant que l'élément tubulaire 5 et les deux embouts de liaison 10 peuvent éventuellement ne former qu'une seule pièce. La partie B externe du flexible 1 forme une enveloppe qui comprend au moins une zone centrale souple 12 en un matériau thermiquement résistant tel du silicone et qui peut être constituée par un soufflet, et deux zones d'extrémité rigides constituées par deux coiffes métalliques 15. Chaque coiffe 15 est constituée par un tronçon tubulaire dont le diamètre intérieur est supérieur au diamètre extérieur des tubulures de raccordement 7. Le bord périphérique d'extrémité 15a de chaque coiffe 15 est raccordé à la zone centrale souple 12 au moyen d'un collier de serrage 16 par exemple. Vers son autre extrémité, chaque coiffe 15 présente une réduction de diamètre pour former un embout de raccordement 15b qui est fixé par soudage à la tubulure de raccordement 7, un épaulement annulaire 15c étant ainsi délimité entre les deux diamètres de chaque coiffe 15. La partie intermédiaire d'isolation thermique C est constituée par un matelas annulaire 18 fait en un matériau fibreux par exemple et qui pénètre à l'intérieur des coiffes 15. Le matelas isolant 18 a un diamètre extérieur qui correspond sensiblement au diamètre intérieur des coiffes 15, et ses deux extrémités viennent respectivement en contact avec les deux épaulements 15c des deux coiffes 15, c'est-à-dire que le matelas isolant 18 s'étend pratiquement sur toute la longueur du flexible 1.

D'une manière générale et comme cela a été évoqué en préambule, le flexible de découplage 1 est amené à subir des déplacements ou déformations dans plusieurs directions et notamment des débattements transversaux en cisaillement. Concrètement, l'élément tubulaire 5 ne peut se déformer que sur une longueur L qui correspond à sa longueur totale à laquelle on a soustrait les longueurs nécessaires au raccordement de ses deux extrémités.

D'une manière générale, les deux coiffes 15 de la partie externe B du flexible 1 doivent s'étendre chacune sur une longueur suffisante pour protéger thermiquement la zone centrale souple 15 de l'enveloppe externe en l'éloignant le plus possible des zones chaudes constituées par les deux tubulures 7 de raccordement du flexible 1 à la ligne d'échappement. Bien entendu, il faut également que la zone centrale souple 15 de l'enveloppe externe du flexible 1 s'étende elle aussi sur une longueur suffisante pour que la partie interne A du flexible, 1 puisse se déformer sous la sollicitation des contraintes mécaniques que subit le flexible 1 dans ses conditions de fonctionnement. Concrètement, cela signifie que les deux bords périphériques d'extrémité 15a des deux coiffes 15 qui sont raccordés à la zone centrale souple 12 vont se situer en regard de la partie déformable de longueur L de l'élément tubulaire interne 5 du flexible 1.

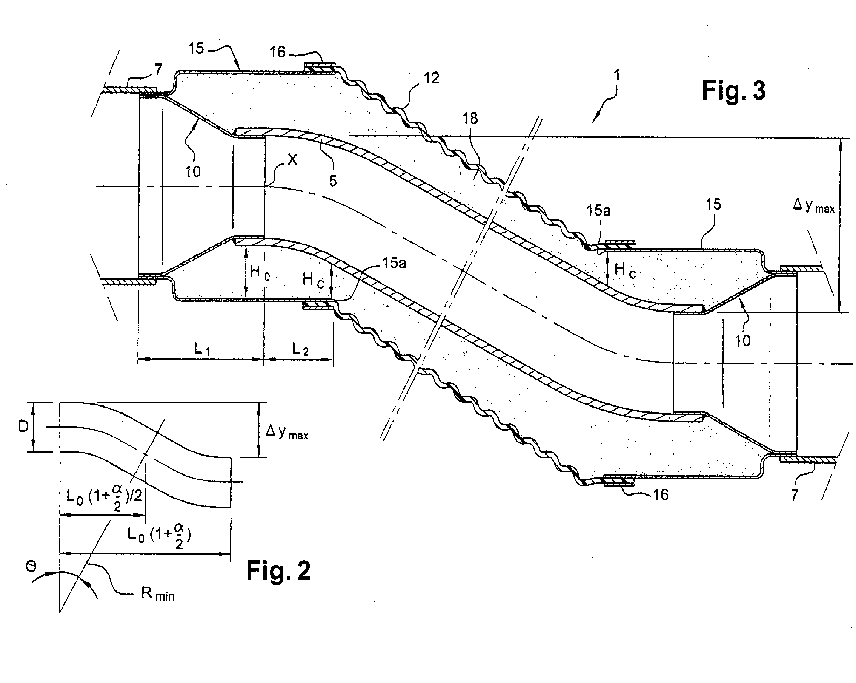

Une première approche de l'invention est illustrée sur les figures 1 et 3 pour résoudre le problème de l'endommagement du matelas isolant 18 par les bords périphériques d'extrémité 15a des coiffes 15 lors de la déformation du flexible 1. Selon cette première approche, on cherche une solution qui vise à définir une longueur de coiffe maximum au-delà de laquelle la compression du matelas isolant 18 est telle qu'il risque d'être endommagé.

Plus précisément, soit une épaisseur initiale $H_o$ du matelas isolant 18 telle que son diamètre externe est sensiblement égal au diamètre interne des coiffes 15, c'est-à-dire que le matelas isolant 18 est globalement en contact avec les coiffes 15 et sur toute la longueur de celles-ci (figure 1).

Lorsque le flexible 1, en particulier son élément tubulaire interne 5, subit en fonctionnement un débattement transversal maximum en cisaillement, comme cela est illustré sur la figure 3, le matelas isolant 18 se trouve comprimé sur une épaisseur $H_c$ par les bords périphériques d'extrémité 15a des coiffes 15. Il faut noter que ce débattement transversal maximum en fonctionnement peut être inférieur au débattement transversal maximum que peut prendre l'élément tubulaire 5.

Selon cette première approche, tout endommagement du matelas isolant 18 sera évité si le rapport $[(H_o - H_c)/H_c]$ est inférieur à 0,3.

Par ailleurs, il est également possible de traduire ce rapport en terme de longueur maximum pour les coiffes 15. A cet effet, la longueur de chaque coiffe 15 peut être scindée en une première longueur $L_1$ allant de son extrémité raccordée à une tubulure de raccordement 7 jusqu'à un point X situé en regard du début de la longueur déformable L de la partie interne A du flexible 1, et en une seconde longueur $L_2$ partant dudit point X jusqu'à l'autre extrémité de la coiffe 15. En outre, l'élément tubulaire 5 est notamment caractérisé par son diamètre extérieur D, son rayon de courbure minimal $R_{min}$, et sa longueur déformable L une fois monté dans la ligne d'échappement.

En prenant le cas d'un élément tubulaire 5 sous la forme d'un agrafé, on va définir son rayon de courbure $R_{min}$ puis en déduire la valeur maximum de la seconde longueur $L_2$ de chaque coiffe 15.

Le rayon de courbure $R_{min}$ est tel que :

$$R_{min} = D x \left(\frac{1}{\alpha} + \frac{1}{2}\right) \qquad (1)$$

où $\alpha$ est l'allongement maximal de l'agrafé.

A ce rayon de courbure minimal $R_{min}$ correspond un débattement transversal maximal $\Delta y_{max}$ pour une longueur comprimée $L_o$ de l'agrafé, ce débattement étant obtenu lorsque l'agrafé est étiré de $\alpha/2$, comme cela est schématiquement illustré sur la figure 2.

On peut ainsi déduire les deux relations suivantes :

$$L_o(1 + \alpha) = 2\left(R_{min} + \frac{D}{2}\right)x\theta \qquad (2)$$

$$\cos\theta = \frac{R_{min} - (\Delta_{ymax}/2)}{R_{min}} = 1 - \frac{\Delta_{ymax}}{2R_{min}} \qquad (3)$$

A partir des relations précitées, on peut déduire une relation entre $R_{min}$ et $\Delta_{ymax}$ pour une longueur comprimée $L_o$ de l'agrafé :

$$L_o(1 + \alpha) = 2\left(R_{min} + \frac{D}{2}\right)arcos\left(1 - \frac{\Delta_{ymax}}{2R_{min}}\right)$$

En fonctionnement, l'agrafé est à tout instant caractérisée par sa longueur au repos L et un débattement transversal $\Delta_y \le \Delta_{ymax}$.

Dans ces conditions, les paramètres L et $\Delta y$ définissent un rayon de courbure R mais pour que le matelas isolant ne soit pas endommagé, la première approche impose la condition :

$$\frac{1}{Ho}(H_o - H_c) \angle 0,3.$$

Or, sachant que :

$$\left[\left(R - \frac{D}{2}\right) - (H_o - H_c)\right]^2 + L_2^2 = \left(R - \frac{D}{2}\right)^2$$

on en déduit que :

$$H_o - H_c = (R - \frac{D}{2}) - \sqrt{(R - \frac{D}{2})^2 - L_2^2}$$

et par conséquent le rapport $\frac{1}{H_o}(H_o - H_c) < 0,3$ équivaut à :

$$L_2 < \sqrt{0,3 H_o (2R - D - 0,3 H_o)} .$$

Par ailleurs, sachant que R est lié à $\Delta y$ et Lo par la relation :

$$R = \frac{\Delta y^2 + L^2}{4 \Delta y}$$

on en déduit que :

$$L_2 max = \sqrt{0,3 H_o (\frac{\Delta y^2 + L^2}{2 \Delta y} - D - 0,3 H_o)}$$

Ainsi, la longueur $L_2$ de chaque coiffe qui est en regard de la partie déformable de la partie interne A du flexible 1 ne doit pas s'étendre au-delà de la valeur $L_{2max}$ précitée pour éviter tout endommagement du matelas isolant 18.

Si on applique cette équation au cas d'un flexible 1 ayant les caractéristiques suivantes : une partie interne A sous la forme d'un agrafé d'un diamètre extérieur de l'ordre de 40mm, une longueur au repos L comprise entre 75 et 165mm, et pouvant subir un débattement transversal maximum de l'ordre de 10 à 20mm en fonctionnement ; la longueur $L_{2max}$ de chaque coiffe 15 peut se situer dans les fourchettes suivantes :

- 25mm < $L_2$ max < 50mm pour $H_o \cong 10$mm;
- 25mm < $L_2$ max < 70mm pour $H_o \cong 20$mm ;
  ($H_o$ étant l'épaisseur initiale du matelas isolant 18).

S'il s'avère que la longueur $L_2$max imposée à chaque coiffe 15 n'est pas suffisante pour qu'elle assure efficacement sa fonction d'isolation thermique vis-à-vis de la zone centrale souple 12, on peut prolonger chaque coiffe 15 par au moins un tronçon terminal mais sans créer de nouvelles zones de compression du matelas isolant 18.

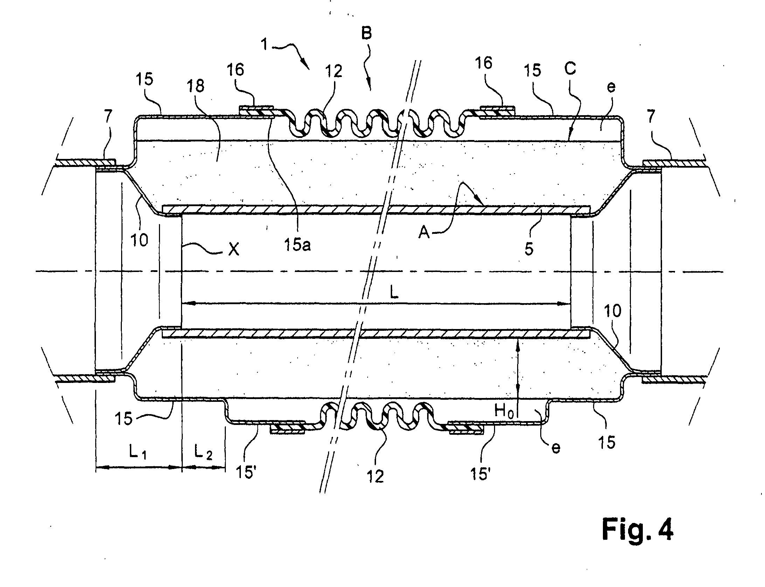

Plus précisément, selon un deuxième mode de réalisation illustré sur la demi-vue en coupe inférieure de la figure 4, chaque coiffe 15 est prolongée par un tronçon terminal 15' de plus grand diamètre, ce qui revient à donner à chaque coiffe 15 une forme étagée, sachant que le diamètre de ces tronçons 15' ne devra pas dépasser le diamètre maximal autorisé pour le flexible. Un espace libre suffisante $\underline{e}$ est ménagé entre le matelas isolant 18 et les bords d'extrémité périphériques 15a des tronçons terminaux 15'. Ainsi, on peut donner à la seconde longueur $L_2$ de chaque coiffe une valeur inférieure ou égale à $L_2$max et la prolonger par un tronçon terminal 15'.

Dans le cas où la zone centrale souple 12 de la partie externe B du flexible 1 est sous la forme d'un soufflet, on peut avantageusement réaliser le raccordement des coiffes 15 ou de leurs tronçons terminaux 15' sur le haut d'une ondulation du soufflet, comme cela est également illustré sur la demi-vue en coupe inférieure de la figure 4, pour diminuer l'encombrement du flexible 1. Par ailleurs, du point de vue thermique, on a intérêt à ce que les bas des ondes du soufflet vienne en contact avec le matelas isolant.

Une seconde approche de l'invention pour résoudre le problème de l'endommagement du matelas isolant 18 par les bords périphériques d'extrémité 15a des coiffes 15 lors de la déformation du flexible 1, consiste à éviter la formation des zones de compression du matelas isolant 18 par les bords périphériques d'extrémité 15a des coiffes 15.

En effet, on peut jouer sur la forme des coiffes 15 et/ou l'épaisseur du matelas isolant 18, sachant que du point de vue thermique il est préférable de se limiter à la forme des coiffes 15.

Ainsi, selon un troisième mode de réalisation illustré sur la demi-vue en coupe supérieure de la figure 4, les coiffes 15 sont semblables à celles illustrées sur la figure 1, mais on augmente leur diamètre dans la limite de l'encombrement autorisé sans modifier l'épaisseur du matelas isolant (18), de manière à créer au moins un espace libre initial suffisant e entre les bords d'extrémité périphériques 15a des coiffes 15 et le matelas isolant 18. En variante, on peut donner à chaque coiffe 15 une forme étagée en la prolongeant par au moins un tronçon terminal 15' comme dans le cas du second mode de réalisation, de manière à créer comme précédemment au moins un espace libre initial suffisant e entre les bords d'extrémités périphériques 15 a des coiffes 15 et le matelas isolant 18. Lorsque la zone centrale souple 12 de l'enveloppe externe est constituée par un soufflet, chaque coiffe 15 ou son tronçon terminal 15' est avantageusement raccordé sur le haut d'une ondulation du soufflet, et le bas des ondes du soufflet vient en contact avec le matelas isolant 18.

## Revendications

1. Méthode pour éviter la détérioration d'un flexible de découplage monté entre deux tubulures (7) d'une ligne d'échappement de moteur de véhicule automobile, ce flexible comprenant une partie interne déformable (A) qui est apte à canaliser le flux des gaz d'échappement et à subir en fonctionnement des déformations telles que des débattements transversaux en cisaillement, une partie externe (B) sous la forme d'une enveloppe continue et étanche comprenant une zone centrale souple (12) et deux coiffes d'extrémité rigides (15), et une partie intermédiaire (C) sous la forme d'un matelas d'isolation thermique (18) qui s'étend sensiblement sur toute la longueur de la partie externe (B) entre la partie interne déformable (A) et la partie externe (B), chaque coiffe rigide (15) s'étendant au moins sur une longueur telle que son bord d'extrémité périphérique (15a) raccordé à la zone centrale souple (12) vient se situer en regard de la partie interne du flexible qui est soumise à des déformations, **caractérisée en ce qu'**elle consiste, pour éviter tout endommagement du matelas d'isolation thermique (18) par ledit bord d'extrémité périphérique (15a) de chaque coiffe lors des débattements transversaux en cisaillement de la partie interne (A) du flexible, à définir la longueur effective des coiffes (15) de manière à ce que, pour une épaisseur initiale ($H_o$) du matelas d'isolation thermique (18) et une épaisseur comprimée ($H_c$) de ce matelas par ledit bord périphérique (15a) de chaque coiffe lors d'un débattement transversal maximum en fonctionnement de la partie interne (A) du flexible, le rapport $[(H_o-H_c)/H_o]$ soit inférieur à 0,3.

2. Méthode selon la revendication 1, **caractérisée en ce qu'**elle consiste à scinder la longueur totale de chaque coiffe (15) en une première longueur ($L_1$) allant de son extrémité raccordée à une tubulure de raccordement (7) jusqu'à un point situé (X) en regard du début de la partie déformable de la partie interne (A) du flexible, et en une seconde longueur ($L_2$) allant dudit point (X) jusqu'à l'autre extrémité de la coiffe (15), et **en ce qu'**il consiste à donner à ladite seconde longueur ($L_2$) de chaque coiffe une longueur maximum, telle que :

$$L_2 max = \sqrt{0,3H_o(\frac{\Delta y^2 + L^2}{2\Delta y} - D - 0,3H_o)}$$

$\Delta y$ = débattement transversal en cisaillement,
D = diamètre extérieur de la partie interne,
Ho = épaisseur initiale du matelas isolant,
L = longueur déformable de la partie interne.

3. Méthode selon la revendication 2, **caractérisée en ce qu'**elle consiste à donner à la seconde longueur ($L_2$) de chaque coiffe (15) une valeur inférieure ou égale à ($L_2 max$), et à prolonger chaque coiffe par au moins un tronçon terminal (15') de plus grand diamètre.

4. Méthode selon l'une quelconque des revendications précédentes, **caractérisée en ce qu'**elle consiste à réaliser la zone centrale souple (12) de l'enveloppe externe sous la forme d'un soufflet et à raccorder chaque coiffe (15) sur le sommet d'une onde du soufflet.

5. Méthode pour éviter la détérioration d'un flexible de découplage monté entre deux tubulures (7) d'une ligne d'échappement de moteur de véhicule automobile, ce flexible comprenant une partie interne déformable (A) qui est apte à canaliser le flux des gaz d'échappement et à subir en fonctionnement des déformations telles que des débattements transversaux en cisaillement, une partie externe (B) sous la forme d'une enveloppe continue et étanche comprenant une zone centrale souple (12) et deux coiffes d'extrémité rigides (15), et une partie intermédiaire (C) sous la forme d'un matelas d'isolation thermique (18) qui s'étend sensiblement sur toute la longueur de la partie externe (B) entre la partie interne déformable (A) et la partie externe (B), chaque coiffe rigide (15) s'étendant au moins sur une longueur telle que son bord d'extrémité périphérique (15a) raccordé à la zone centrale souple (12) vient se situer en regard de la partie interne (A) du flexible qui est soumise à des déformations, **caractérisée en ce qu'**elle consiste, pour éviter tout endommagement du matelas d'isolation thermique (18) par ledit bord d'extrémité périphérique (15a) de chaque coiffe lors des débattements transversaux en cisaillement de la partie interne du flexible (A), à augmenter le diamètre de chaque coiffe (15) avec un espace libre initial suffisant (e) entre lesdits bords d'extrémité périphériques (15a) des coiffes (15) et le matelas isolant (18), de manière à ce que ledit bord d'extrémité périphérique (15a) des coiffes ne vienne pratiquement pas en contact avec le matelas d'isolation thermique (18) lors d'un débattement transversal maximum en fonctionnement de la partie interne (A) du flexible.

6. Méthode selon la revendication 5, **caractérisée en ce qu'**il consiste à donner à chaque coiffe (15) une forme étagée avec au moins un tronçon terminal (15') de plus grand diamètre avec un es pace libre initial suffisant (e) entre lesdits bords d'extrémité périphériques (15a) des coiffes (15) et le matelas isolant (18).

7. Méthode selon la revendication 5 ou 6, **caractérisée en ce qu'**elle consiste à réaliser la zone centrale souple (12) de l'enveloppe externe sous la forme d'un soufflet et à raccorder chaque coiffe (15) sur le sommet d'une onde du soufflet.

8. Flexible de découplage pour ligne d'échappement de moteur de véhicule automobile, **caractérisé en ce qu'**il met en oeuvre la méthode telle que définie par l'une quelconque des revendications précédentes.

9. Flexible de découplage selon la revendication 8, **caractérisé en ce que** la partie interne déformable (A) du flexible est formée par un agrafé métallique lâche.

## Claims

1. A method of avoiding damage to a decoupling hose mounted between two tubes (7) in a motor vehicle exhaust system, the hose comprising a deformable inner portion (A) which is suitable for channeling the flow of exhaust gases and for being subjected in operation to deformations such as transverse deflections in shear, an outer portion (B) in the form of a continuous leaktight sleeve having a flexible central zone (12) and two rigid endpieces (15), and an intermediate portion (C) in the form of a wad of thermal lagging (18) which extends substantially over the entire length of the outer portion (B) between the deformable inner portion (A) and the outer portion (B), each rigid endpiece (15) extending at least over a length such that its peripheral end edge (15a) connected to the flexible central zone (12) is situated in register with the inner portion of the hose which is subjected to deformations, the method being **characterized in that**, in order to avoid any damage to the wad of thermal lagging (18) by the peripheral end edge (15a) of each endpiece during transverse deflections in shear of the inner portion (A) of the hose, it consists in defining the effective length of the endpieces (15) in such a manner that for an initial thickness $H_0$ of the wad of thermal lagging (18) and for a compressed thickness $H_c$ of said wad when compressed by said peripheral edge (15a) of each endpiece during maximum transverse deflection in operation of the inner portion (A) of the hose, the ratio $[H_0-H_c]/H_0$ is less than 0.3.

2. A method according to claim 1, **characterized in that** it consists in subdividing the total length of each endpiece (15) into a first length $L_1$ extending from its end connected to a coupling tube (7) to a point (X) situated in register with the beginning of the deformable portion of the inner portion (A) of the hose, and a second length $L_2$ extending from said point (X) to the other end of the endpiece (15), and **in that** it consists in giving said second length $L_2$ of each endpiece a maximum length such that:

$$L_2 max = \sqrt{0.3H_0\left(\frac{\Delta y^2 + L^2}{2\Delta y} - D - 0.3H_0\right)}$$

where
$\Delta y$ = transverse deflection in shear;

D = outside diameter of the inner portion;
$H_0$ = initial thickness of the wad of lagging; and
L = the deformable length of the inner portion.

3. A method according to claim 2, **characterized in that** it consists in giving the second length $L_2$ of each endpiece (15) a value that is less than or equal to $L_2$max, and in extending each endpiece by at least one terminal segment (15') of greater diameter.

4. A method according to any preceding claim, **characterized in that** it consists in making the flexible central zone (12) of the outer sleeve in the form of a bellows, and in connecting each endpiece (15) to the top of a corrugation of the bellows.

5. A method of avoiding damage to a decoupling hose mounted between two tubes (7) in a motor vehicle exhaust system, the hose comprising a deformable inner portion (A) which is suitable for channeling the flow of exhaust gases and for being subjected in operation to deformations such as transverse deflections in shear, an outer portion (B) in the form of a continuous leaktight sleeve having a flexible central zone (12) and two rigid endpieces (15), and an intermediate portion (C) in the form of a wad of thermal lagging (18) which extends substantially over the entire length of the outer portion (B) between the deformable inner portion (A) and the outer portion (B), each rigid endpiece (15) extending at least over a length such that its peripheral end edge (15a) connected to the flexible central zone (12) is situated in register with the inner portion (A) of the hose which is subjected to deformations, **characterized in that**, in order to avoid any damage to the wad of thermal lagging (18) by the peripheral end edge (15a) of each endpiece during transverse deflections in shear of the inner portion (A) of the hose, it consists in adapting the shape of each endpiece (15) to leave sufficient initial empty space (e) between said peripheral end edges (15a) of the endpieces (15) and the wad of lagging (18), in such a manner that said peripheral end edge (15a) of each endpiece makes practically no contact with the wad of thermal lagging (18) during maximum transverse deflection in operation of the inner portion (A) of the hose.

6. A method according to claim 5, **characterized in that** it consists in giving each endpiece (15) a stepped shape with at least one terminal segment (15') of greater diameter leaving sufficient initial empty space (e) between said peripheral end edges (15a) of the endpieces (15) and the wad of lagging (18).

7. A method according to claim 5 or claim 6, **characterized in that** it consists in making the flexible central zone (12) of the outer sleeve in the form of a bellows and in connecting each endpiece (15) to the top of a corrugation of the bellows.

8. A decoupling hose for a motor vehicle exhaust system, **characterized in that** it implements a method as defined by any preceding claim.

9. A decoupling hose according to claim 8, **characterized in that** the deformable inner portion (A) of the hose is formed by a metal tube formed by a loose folded-over seam joint.


**Patentansprüche**

1. Verfahren zur Vermeidung der Beschädigung eines flexiblen Entkopplungselements, welches zwischen zwei Leitungen (7) einer Auspuffanlage eines Kraftfahrzeugs angebracht ist, wobei dieses flexible Element umfasst: einen verformbaren internen Teil (A), welcher dazu ausgestaltet ist, den Strom von Auspuffgasen zu kanalisieren und im Betrieb Verformungen wie transversalen Scherauslenkungen zu unterliegen, einen externen Teil (B) in Form einer durchgängigen und dichten Hülle, welcher einen flexiblen zentralen Bereich (12) und zwei starre Endabdeckungen (15) umfasst, und einen Zwischenteil (C) in Form einer Wärmeisolationsmatte (18), welcher sich im Wesentlichen über die gesamte Länge des externen Teils (B) zwischen dem verformbaren internen Teil (A) und dem externen Teil (B) erstreckt, wobei jede starre Abdeckung (15) sich wenigstens über eine solche Länge erstreckt, dass ihre Umfangsendkante (15a), welche an den flexiblen zentralen Bereich (12) angeschlossen ist, sich gegenüber dem internen Teil des flexiblen Elements befindet, welcher Verformungen unterliegt, **dadurch gekennzeichnet, dass** es darauf beruht, um jegliche Beschädigung der Wärmeisolationsmatte (18) durch die Umfangsendkante (15a) jeder Abdeckung bei transversalen Scherauslenkungen des internen Teils (A) des flexiblen Elements zu vermeiden, die effektive Länge der Abdeckungen (15) derart zu definieren, dass für eine anfängliche Dicke ($H_0$) der Wärmeisolationsmatte (18) und eine komprimierte Dicke ($H_c$) dieser Matte durch die Umfangskante (15a) jeder Abdeckung bei einer maximalen transversalen Auslenkung im Betrieb des internen Teils (A) des flexiblen Elements, das Verhältnis $[(H_0-H_c)/H_0]$ kleiner als 0, 3 ist.

2. Verfahren nach Anspruch 1, **dadurch gekennzeichnet, dass** es darauf beruht, dass die Gesamtlänge von jeder Abdeckung (15) aufgeteilt wird in eine erste Länge ($L_1$), welche von ihrem mit einer Anschlussleitung (7) verbundenen Ende bis zu einem gegenüber dem Anfang des verformbaren Bereichs des internen Teils (A) des flexiblen Elements liegenden Punkt verläuft, und in eine zweite Länge ($L_2$), welche von dem Punkt (X) bis zu dem anderen Ende der Abdeckung (15) verläuft, und dass es darauf beruht, der zweiten Länge ($L_2$) jeder Abdeckung eine maximale Länge zu geben, so dass:

$$L_2 \max = \sqrt{0{,}3H_0(\frac{\Delta y^2 + L^2}{2\Delta y} - D - 0{,}3H_0)} \ ,$$

wobei
$\Delta y$ = transversale Scherauslenkung,
$D$ = Außendurchmesser des internen Teils,
$H_0$ = anfängliche Dicke der Isolationsmatte,
$L$ = verformbare Länge des internen Teils.

3. Verfahren nach Anspruch 2, **dadurch gekennzeichnet, dass** es darauf beruht, der zweiten Länge ($L_2$) jeder Abdeckung (15) einen Wert von kleiner oder gleich ($L_2\max$) zu geben und jede Abdeckung durch wenigstens einen Endabschnitt (15') mit größerem Durchmesser zu verlängern.

4. Verfahren nach einem der vorhergehenden Ansprüche, **dadurch gekennzeichnet, dass** es darauf beruht, den zentralen flexiblen Bereich (12) der externen Hülle in Form eines Balgs zu realisieren und jede Abdeckung (15) an dem Scheitelpunkt einer Welle des Balgs anzuschließen.

5. Verfahren zur Vermeidung der Beschädigung eines flexiblen Entkopplungselements, welches zwischen zwei Leitungen (7) einer Auspuffanlage eines Kraftfahrzeugs angebracht ist, wobei dieses flexible Element umfasst: einen verformbaren internen Teil (A), welcher dazu ausgestaltet ist, den Strom von Auspuffgasen zu kanalisieren und im Betrieb Verformungen wie transversalen Scherauslenkungen zu unterliegen, einen externen Teil (B) in Form einer durchgängigen und dichten Hülle, welche einen flexiblen zentralen Bereich (12) und zwei starre Endabdeckungen (15) umfasst, und einen Zwischenteil (C) in Form einer Wärmeisolationsmatte (18), welcher sich im Wesentlichen über die gesamte Länge des externen Teils (B) zwischen dem verformbaren internen Teil (A) und dem externen Teil (B) erstreckt, wobei jede starre Abdeckung (15) sich wenigstens über eine solche Länge erstreckt, dass ihre Umfangsendkante (15a), welche an den flexiblen zentralen Bereich (12) angeschlossen ist, sich gegenüber dem internen Teil (A) des flexiblen Elements befindet, welcher Verformungen unterliegt, **dadurch gekennzeichnet, dass** es darauf beruht, um jegliche Beschädigung der Wärmeisolationsmatte (18) durch die Umfangsendkante (15a) jeder Abdeckung bei transversalen Scherauslenkungen des internen Teils des flexiblen Elements (A) zu vermeiden, den Durchmesser von jeder Abdeckung (15) mit einem ausreichenden anfänglichen Freiraum (e) zwischen den Umfangsendkanten (15a) der Abdeckungen (15) und der Isolationsmatte (18) zu vergrößern, so dass die Umfangsendkante (15a) der Abdeckungen bei einer maximalen Scherauslenkung des internen Teils (A) des flexiblen Elements praktisch nicht in Kontakt mit der Wärmeisolationsmatte (18) kommt.

6. Verfahren nach Anspruch 5, **dadurch gekennzeichnet, dass** es darauf beruht, jeder Abdeckung (15) eine gestufte Form mit wenigstens einem Endabschnitt (15') mit größerem Durchmesser mit einem ausreichenden anfänglichen Freiraum (e) zwischen den Umfangsendkanten (15a) der Abdeckungen (15) und der Isolationsmatte (18) zu geben.

7. Verfahren nach Anspruch 5 oder 6, **dadurch gekennzeichnet, dass** es darauf beruht, den flexiblen zentralen Bereich (12) der externen Hülle in Form eines Balgs zu realisieren und jede Abdeckung (15) an dem Scheitelpunkt einer Welle des Balgs anzuschließen.

8. Flexibles Entkopplungselement für eine Auspuffanlage eines Kraftfahrzeugs, **dadurch gekennzeichnet, dass** es das Verfahren wie in einem der vorhergehenden Ansprüche definiert einsetzt.

9. Flexibles Entkopplungselement nach Anspruch 8, **dadurch gekennzeichnet, dass** der interne verformbare Teil (A) des flexiblen Elements durch eine lockere Metallklammerung gebildet ist.

Fig. 1

Fig. 3

Fig. 2

$\Delta y_{max}$

$L_0 (1+\frac{\alpha}{2})$

$L_0 (1+\frac{\alpha}{2})/2$

$R_{min}$

$\Theta$

$D$

**Fig. 4**

EP 1 424 472 B1